# EUROPÄISCHE PATENTSCHRIFT

(11) **EP 2 450 230 B1**
(45) Veröffentlichungstag und Bekanntmachung des Hinweises auf die Patenterteilung: **16.04.2014**
(21) Anmeldenummer: 11008624.6
(22) Anmeldetag: 27.10.2011
(51) Int. Cl.: B60N 2/48

(54) **Kopfstütze eines Kraftfahrzeugsitzes, umfassend einen Kopfstützenkörper**
Headrest of a motor vehicle seat, comprising a headrest body
Appui-tête d'un siège de véhicule automobile comprenant un corps d'appui-tête

(30) Priorität: 04.11.2010 DE 202010015086 U; 24.12.2010 DE 202010017047 U
(43) Veröffentlichungstag der Anmeldung: 09.05.2012
(73) Patentinhaber: Universität Kassel, 34125 Kassel (DE)
(72) Erfinder: Klein, Bernd Dr. Ing, 34379 Calden (DE); Nölke, Olaf, 34266 Niestetal (DE); Schützenmeister, Jan, 34121 Kassel (DE); Markus, Philipp, 34127 Kassel (DE)
(74) Vertreter: Walther, Walther & Hinz GbR

(56) Entgegenhaltungen:
- DE-B3-102006 002 944
- US-A1- 2004 239 160

## Beschreibung

Die Erfindung betrifft eine Kopfstütze eines Kraftfahrzeugsitzes, umfassend einen Kopfstützenkörper sowie mindestens eine den Kopfstützenkörper haltende Führungsstange, die durch die Rückenlehne des Fahrzeugsitzes aufnehmbar ist, wobei die Führungsstange durch eine in der Rückenlehne angeordnete Aufnahmeeinrichtung verschieblich aufgenommen ist, wobei zur Führung der Führungsstange die Aufnahmeinrichtung über eine Führungsnut verfügt, die der Aufnahme zweier Führungszapfen dient. Kopfstützen, die in der Rückenlehne eines Kraftfahrzeugsitzes untergebracht sind, sind aus dem Stand der Technik hinreichend bekannt. Hierbei gibt es Kopfstützen, bei denen der Kopfstützenkörper durch eine Führungsstange in der Rückenlehne angeordnet ist, und auch solche, bei denen der Kopfstützenkörper durch zwei Führungsstangen in der Rückenlehne verschieblich gehalten ist. Die Kopfstützenkörper, die durch zwei Führungsstangen in der Rückenlehne gehalten sind, sind wesentlich weiter verbreitet. Die Erfindung bezieht sich allerdings ausdrücklich auch auf solche Kopfstützen, die sowohl mit einer Führungsstange als auch mit zwei Führungsstangen durch die Lehne aufgenommen sind.

Zur Anpassung an die Größe der auf dem Sitz sitzenden Person ist es bekannt, die Kopfstütze in der Höhe verstellbar zu gestalten. Eine solche Verstellung kann elektrisch oder auch manuell vorgenommen werden. Die Stellung der Kopfstütze, und hier insbesondere die Höhe der Kopfstütze, ist essenziell, um Verletzungen an der Halswirbelsäule bei einem Front- oder Heckaufprall zu vermeiden. Nun ist bekannt, dass beispielsweise bei einem Heckaufprall die Personen in dem vorausfahrenden Fahrzeug in dem Sitz um etwa 20 cm trotz Gurt nach oben aufsteigen, was bedeutet, dass selbst bei korrekt eingestellter Kopfstütze sich der Kopfstützenkörper nicht mehr im Bereich des Kopfes befindet, sondern im Bereich des Halses und dass dann, wenn der Kopf zurückschlägt, Schäden an der Halswirbelsäule zu befürchten sind, die auch zum Tod führen können.

Dieses Problem ist an sich auch bekannt, und insofern ist im Stand der Technik auch bereits bekannt im Falle eines Aufpralls dafür zu sorgen, dass mittels einer entsprechenden Einrichtung die Kopfstütze nicht nur nach oben verfahren wird, sondern gleichzeitig auch eine Bewegung nach vorne ausführt. Dies deshalb, um den Weg beim Zurückschlagen des Kopfes und damit die Wucht, mit welcher der Kopf an die Kopfstütze anschlägt, zu vermindern. In diesem Zusammenhang wird beispielhaft auf die DE 103 13 800 A1 und die DE 103 21 744 A1 verwiesen, aus der sich ein solcher Bewegungsvorgang der Kopfstütze im Falle eines Crashs, also z. B. einem Heck- oder Frontaufprall, ergibt. Im Einzelnen ist dort bei einer Kopfstütze mit zwei Führungsstangen vorgesehen, dass einer jeden Führungsstange zugeordnet seitlich eine Führungseinrichtung vorgesehen ist, wobei die Führungseinrichtung zwei Nuten umfasst, die gerade verlaufend aber in unterschiedlichen Winkeln zueinander in der Führungseinrichtung angeordnet sind. Die Führungsstange zeigt im Bereich der beiden Nuten jeweils einen Zapfen, wobei ein jeder dieser Zapfen in eine der zuvor beschriebenen Nuten eingreift. Während der Aufwärtsbewegung wird durch die Führung der Zapfen in den zuvor beschriebenen Nuten dieser Aufwärtsbewegung eine Bewegung des Kopfstützenkörpers nach vorne überlagert. Wie bereits an anderer Stelle ausgeführt, ist eine solche Führungseinrichtung einseitig außen einer jeden Führungsstange zugeordnet.

Nachteilig hierbei ist, dass es während der Aufwärtsbewegung zu einem Verkanten der Zapfen in den Führungsnuten kommen kann, sodass die Aufwärtsbewegung der Kopfstütze im Falle eines Crashs unter Umständen behindert oder gar unterbunden wird. Der Grund hierfür ist darin zu finden, dass die beiden Führungsstangen der Kopfstütze einen nicht unerheblichen Abstand aufweisen und darüber hinaus die Führungsstangen selbst aufgrund ihrer Länge und auch der Sitz nicht eine Stabilität derart aufweisen, dass ein solches Verkanten mit hinreichender Sicherheit verhindert werden könnte.

Darüber hinaus entstehen bei einem Crash erhebliche Verformungen, sodass ein Verkanten bei einer einseitigen Führung wahrscheinlich ist.

Aus der US-A-2004/0239160 ist in diesem Zusammenhang ein Sitz bekannt, der eine Kopfstütze gemäß dem Oberbegriff des Anspruchs 1 zeigt. Die ausfahrbare Kopfstütze umfasst im Einzelnen einen Rahmen mit zwei parallel zueinander verlaufenden Traversen. Durch diesen Rahmen werden zwei Führungshülsen aufgenommen, die parallel zueinander angeordnet sind, und die jeweils einen Führungsstab aufnehmen, wobei auf den beiden Führungsstäben endseitig der Kopfstützenkörper lagert. Zwischen den beiden Führungshülsen befindet sich eine Traverse, die an den einander gegenüberliegenden Führungshülsen fixiert ist. Der Rahmen nimmt darüber hinaus zwei parallel zueinander verlaufende Metallplatten auf, die über jeweils eine Kulisse verfügen zur Aufnahme jeweils eines Gleitstückes. Zwischen der Traverse und dem Rahmen befindet sich eine vorspannbare Schraubenfeder. Erkennbar ist, dass eine jede Führungshülse lediglich auf einer Seite durch die Gleitstücke geführt ist, sodass die Gefahr des Verkantens besteht.

Die DE 10 2006 002 944 B3 zeigt eine Kopfstütze, bei der der Kopfstützenkörper durch zwei Tragstangen gehalten wird, wobei die Tragstangen durch jeweils eine Kopfstützentülle verschieblich aufgenommen sind. Die Kopfstützentülle lagert in einem Kopfstützenträger, der wiederum in einer Federkammer angeordnet ist. Die Federkammer nimmt, wie der Begriff dies bereits erkennen lässt, eine Feder auf, die auf den Kopfstützenträger wirkt, dass heißt, die Kopfstütze schlussendlich in die ausgefahrene Position überführt. Der Kopfstützenträger verfügt über einen Kulissenbolzen, der in der Kulisse geführt ist. Darüber hinaus zeigt die Federkammer einen Gelenkbolzen, um den die Federkammer verschwenkbar ist. Ausgelöst wird die Aufwärtsbewegung der Kopfstütze mithilfe eines auf der Rückseite der Sitzlehne angeordneten Prallbügels, wobei durch die Bewegung des Prallbügels schlussendlich bewirkt wird, dass der Kulissenbolzen aus seiner Arretierposition herausgelangen soll, und aufgrund der Kraft der Federn in den Federkammern der Kopfstützenkörper nach oben in Richtung auf den Kopf des Fahrers zu verschwenkt wird. Auch hier besteht die Gefahr des Verkantens bei der

Aufwärtsbewegung der Kopfstütze.

Die der Erfindung zugrunde liegende Aufgabe besteht demzufolge darin, bei einer Kopfstütze der eingangs genannten Art ein Verkanten bei der Aufwärtsbewegung der Kopfstütze im Falle eines Crashs zu verhindern.

Zur Lösung der Aufgabe dienen die Merkmale des kennzeichnenden Teils des Anspruchs 1 in Verbindung mit dem Merkmalen des Oberbegriffs.

Hieraus wird Folgendes deutlich:

Die Aufwärtsbewegung der Führungsstange erfolgt zu beiden Seiten seitlich geführt. Dadurch, dass die Führung unmittelbar zu beiden Seiten der Führungsstange bzw. zu beiden Seiten der Führungsstangen erfolgt, besteht nicht die Gefahr des Verkantens, was insbesondere in Bezug auf eine Kopfstütze gilt, bei der der Kopfstützenkörper durch zwei Führungsstangen gehalten ist, da dort der Abstand der beiden Führungsstangen zueinander derart groß ist, dass es bereits bei geringfügigen Abweichungen von der Ideallinie bei der Aufwärtsbewegung zu Verkantungen kommen kann.

Nach einer ersten Ausführungsform erfolgt die Führung unmittelbar, nach einer zweiten Ausführungsform mittelbar. In diesem Zusammenhang ist nach der ersten Ausführungsform vorgesehen, dass zur Führung der mindestens einen Führungsstange die Aufnahmeeinrichtung über zwei einander gegenüberliegende Führungsnuten verfügt, wobei zur Führung der Führungsstange in den Führungsnuten an der Führungsstange mindestens zwei Führungszapfen vorgesehen sind. Hieraus wird deutlich, dass die Aufnahmeeinrichtung im Wesentlichen unmittelbar an der oder den Führungsstangen anliegt, um hierdurch die Entstehung von Momenten, die zu einem Verkanten führen können, zu verhindern.

Vorteilhafte Merkmale und Ausgestaltung der Erfindung sind den Unteransprüchen zu entnehmen.

Es wurde bereits an anderer Stelle dargelegt, dass eine Kopfstütze in der Höhe verstellbar ist, um eine Anpassung an die Größe der Person auf dem Sitz vornehmen zu können. Hierbei ist in der Rückenlehne des Fahrzeugsitzes eine Führungshülse angeordnet, in der die Führungsstange längsverschieblich aber arretierbar beweglich ist. Da die Höhenverstellung auch bei der erfindungsgemäßen Kopfstütze gewährleistet sein soll, ist nach einer zweiten Ausführungsform der Erfindung, bei der die mindestens eine Führungsstange in einer Führungshülse längsverschieblich angeordnet ist, vorgesehen, dass zur Führung der jeweiligen Führungshülse mit der Führungsstange, die Aufnahmeeinrichtung über zwei einander gegenüberliegende Führungsnuten verfügt, wobei die Führungshülse im Bereich der Führungsnuten jeweils mindestens zwei Führungszapfen aufweist, die in die Führungsnuten eingreifen. Das heißt, Gegenstand der Anmeldung ist nicht nur eine Ausführungsform, bei der die Führungsstangen unmittelbar durch die Aufnahmeeinrichtung erfasst werden, sondern auch mittelbar durch die Führungshülsen, in der die Führungsstangen längsverschieblich geführt sind. Hierbei ist im Einzelnen die Aufnahmeeinrichtung im Querschnitt U-förmig ausgebildet, wobei die beiden Schenkel der U-förmigen Aufnahmeeinrichtung jeweils eine Führungsnut aufweisen. Eine im Querschnitt U-förmige Aufnahmeeinrichtung lässt sich auf einfache und preiswerte Weise herstellen, und zwar insofern als entsprechende Bleche lediglich tief gezogen oder gekantet werden.

Eine weitere vorteilhafte Ausgestaltung der Erfindung zeichnet sich dadurch aus, dass die Führungsnuten in der Aufnahmeeinrichtung in Richtung der

Aufwärtsbewegung der Kopfstütze jeweils über zwei Abschnitte verfügen, wobei der erste untere Abschnitt im Wesentlichen gerade verlaufend und der zweite sich unmittelbar daran anschließende Abschnitt einen in Richtung des Kopfes der Person bogenförmigen Verlauf aufweist.

Des Weiteren ist nach einem vorteilhaften Merkmal insbesondere vorgesehen, dass sich im Ausgangszustand der jeweils untere Führungszapfen am unteren Ende der Führungsnut befindet, wohingegen sich der jeweils obere Führungszapfen im Übergangsbereich vom ersten zum zweiten Abschnitt befindet. Hieraus wird deutlich, dass die beiden Abschnitte ineinander übergehen und durch die Form der Führungsnuten die Aufwärtsbewegung nicht nur nach oben erfolgt, sondern auch nach vorne, was bedeutet, dass der Kopfstützenkörper eine Bewegung nach oben in Richtung des Kopfes, der auf dem Sitz sitzenden Person ausführt.

Um im Crashfall zu gewährleisten, dass die Kopfstütze ausfährt, ist eine entsprechende Einrichtung vorgesehen. Diese Einrichtung, die sich beispielsweise als Kolben-Zylindereinrichtung darstellt, kann entweder pneumatisch die Aufwärtsbewegung der Kopfstütze, magnetisch oder auch pyrotechnisch auslösen. Der Stand der Technik sieht hier unterschiedliche Möglichkeiten vor.

Anhand der Zeichnungen wird die Erfindung nachstehend beispielhaft näher erläutert.
- Fig. 1: zeigt schematisch eine solche erfindungsgemäße Kopfstütze in einer ersten Ausführungsform, wobei die Rückenlehne des Fahrzeugs der Übersichtlichkeit wegen weggelassen worden ist;
- Fig. 2: zeigt einen Schnitt gemäß der Linie II — II aus Fig. 1;

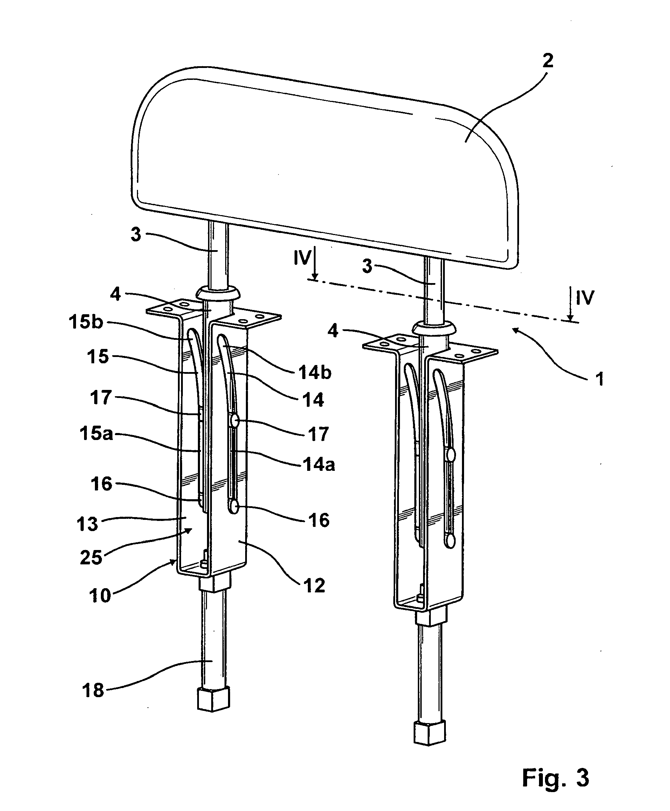

- Fig. 3: zeigt schematisch eine solche erfindungsgemäße Kopfstütze in einer zweiten Ausführungsform, wobei die Rückenlehne des Fahrzeugs der Übersichtlichkeit wegen weggelassen worden ist;

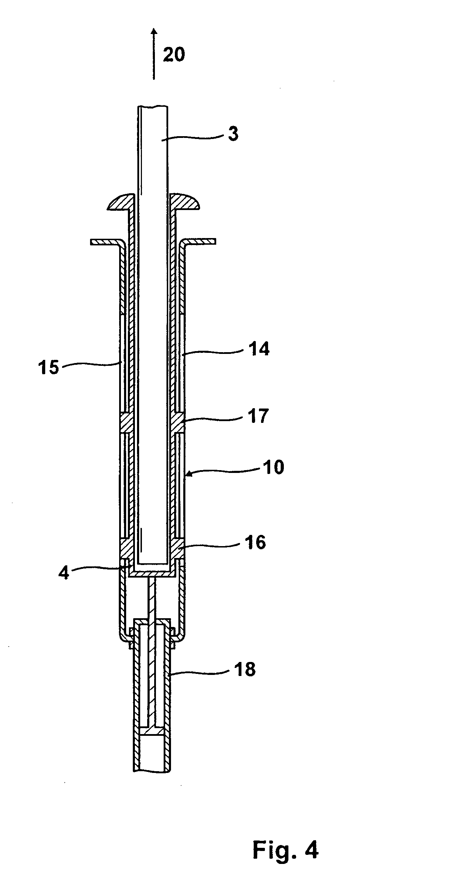

- Fig. 4: zeigt einen Schnitt gemäß der Linie IV - IV aus Fig. 3.

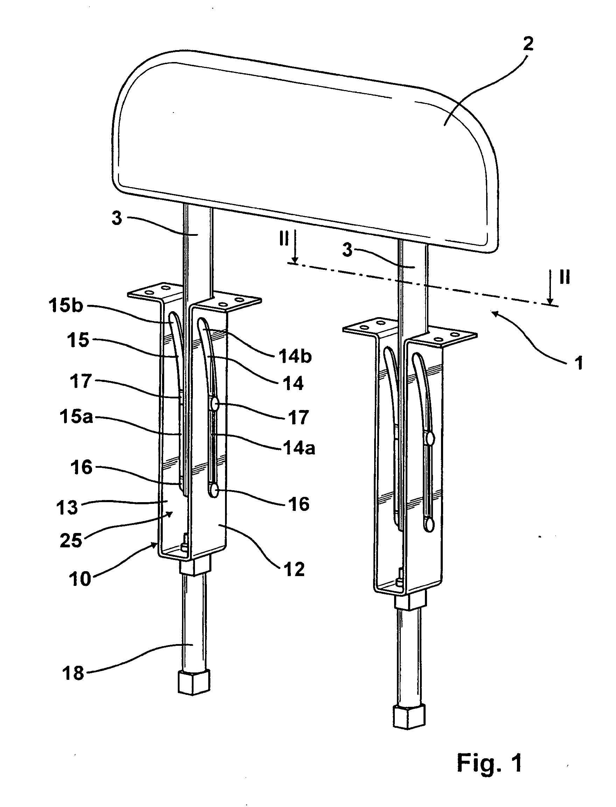

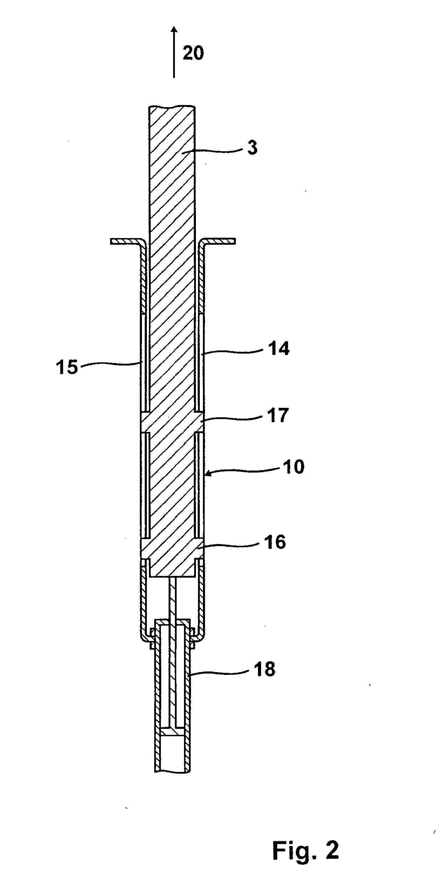

Die mit 1 bezeichnete Kopfstütze umfasst den Kopfstützenkörper 2 sowie die beiden Führungsstangen 3, durch die der Kopfstützenkörper in der Rückenlehne befestigt ist. In einer ersten Ausführungsform (Fig. 1, Fig. 2) sind die Führungsstangen unmittelbar durch die Aufnahmeeinrichtung 10 geführt. In der zweiten Ausführungsform sind die beiden Führungsstangen 3 in einer Führungshülse 4 geführt, wobei die Führungshülse 4 die Verstellung des Kopfstützenkörpers in der Höhe ermöglicht, wie dies bereits beschrieben worden ist.

Wesentlich für die Erfindung ist nunmehr die Ausbildung der insgesamt mit 10 bezeichneten Aufnahmeeinrichtung. Die Aufnahmeeinrichtung 10 ist im Querschnitt U-förmig ausgebildet, und besitzt die beiden Schenkel 12 und 13. Die beiden Schenkel weisen jeweils eine identisch ausgebildete Führungsnut 14, 15 auf, wobei eine jede Führungsnut 14, 15 in zwei Abschnitte 14a, 14b und 15a, 15b unterteilt ist. Der Abschnitt 14a, 15a ist im Wesentlichen gerade verlaufend ausgebildet, wohingegen der Abschnitt 14b, 15b bogenförmig gehalten ist. Im Ausgangszustand, wie in der Fig. 1 dargestellt ist, sitzen in der Nut 14, 15 zwei Führungszapfen 16, 17 ein, die an der Führungsstange 3 oder an der Führungshülse 4 befestigt sind.

Die Führungshülse 4 ist mit einem Kolben-Zylinderantrieb 18 verbunden, der in einer wie auch immer gearteten Weise beispielsweise pneumatisch, magnetisch oder auch pyrotechnisch die Führungshülse 4 und damit auch die Führungsstange 3 oder die Führungsstange allein in Richtung des Pfeils 20 aufwärts bewegt. Der Aufwärtsbewegung in Richtung des Pfeils 20 erfolgt in Überlagerung einer Bewegung nach vorne entsprechend der

Ausbildung der Führungsnut 14, 15, da, wie bereits ausgeführt, der Abschnitt 14b, 15b in der Führungsnut bogenförmig nach vorne zeigend ausgebildet ist. Um eine solche überlagerte Vorwärts- und Aufwärtsbewegung zu ermöglichen, ist die Aufnahmeeinrichtung 10 im Querschnitt U-förmig gehalten, d. h., in Richtung der Bewegung nach vorne ist die Aufnahmeeinrichtung geöffnet (Pfeil 25). Dadurch, dass die beiden Führungsnuten 14, 15 unmittelbar an der Führungshülse 4 bzw. der Führungsstange 3 anliegen und entsprechend auch die Führungszapfen 16, 17 unmittelbar ohne einen größeren seitlichen Abstand in den Führungsnuten 14, 15 einsitzen, wird ein Verkanten der Kopfstütze 1 während der Aufwärtsbewegung verhindert, was insbesondere in Bezug auf Kopfstützen mit zwei Führungsstangen 3 gilt, da eine jede Führungsstange 3 bzw. eine jede Führungshülse 4, die eine Führungsstange 3 aufnimmt, unmittelbar durch die Aufnahmeeinrichtung 10 geführt ist.

### Bezugszeichenliste:

- 1: Kopfstütze
- 2: Kopfstützenkörper
- 3: Führungsstange
- 4: Führungshülse
- 10: Aufnahmeeinrichtung
- 12, 13: Schenkel
- 14, 15: Führungsnut
- 14a, 14b: Abschnitt der Führungsnut
- 15a, 15b: Abschnitt der Führungsnut
- 16, 17: Führungszapfen
- 18: Kolben-Zylinderantrieb
- 20: Pfeil
- 25: Pfeil

## Patentansprüche

1. Kopfstütze (1) eines Kraftfahrzeugsitzes, umfassend einen Kopfstützenkörper (2) sowie mindestens eine den Kopfstützenkörper (2) haltende Führungsstange (3), die durch die Rückenlehne des Fahrzeugsitzes aufnehmbar ist, wobei die Führungsstange (3) durch eine in der Rückenlehne angeordnete Aufnahmeeinrichtung (10) verschieblich aufgenommen ist,
wobei zur Führung der Führungsstange die Aufnahmeeinrichtung (10) über eine Führungsnut verfügt, die der Aufnahme zwei Führungszapfen (16, 17) dient,
**dadurch gekennzeichnet,**
**dass** durch die Aufnahmeeinrichtung (10) die mindestens eine Führungsstange (3) an zwei einander gegenüberliegenden Seiten der Führungsstange (3) während der Aufwärtsbewegung der Kopfstütze (1) im Crash-Fall geführt ist,
wobei zur Führung der mindestens einen Führungsstange (3) oder der die Führungsstange (3) aufnehmenden Führungshülse (4), die Aufnahmeeinrcihtung (10) über zwei einander gegenüberliegende Führungsnuten (14, 15) verfügt,
wobei zur Führung der Führungsstange (3) oder der Führungshülse (4) in den Führungsnuten, an der Führungsstange oder der Führungshülse jeweils mindestens zwei übereinander angeordnete Führungszapfen (16, 17) vorgesehen sind, die in die jeweilige Führungsnut (14, 15) eingreifen.

2. Kopfstütze nach Anspruch 1,
**dadurch gekennzeichnet,**
**dass** die mindestens eine Führungsstange (3) in der Führungshülse (4) längsverschieblich angeordnet ist.

3. Kopfstütze nach Anspruch 1 oder 2,
**dadurch gekennzeichnet,**
**dass** die Aufnahmeeinrichtung (10) im Querschnitt U-förmig ausgebildet ist, wobei die beiden Schenkel (12, 13) der U-förmigen Aufnahmeeinrichtung (10) jeweils die Führungsnut (14, 15) aufweisen.

4. Kopfstütze nach einem der voranstehenden Ansprüche,
**dadurch gekennzeichnet,**
**dass** die Führungsnuten (14, 15) in Richtung der Aufwärtsbewegung der Kopfstütze (1) jeweils über zwei Abschnitte (14a, 14b; 15a, 15b) verfügen, wobei der erste untere Abschnitt (14a, 15a) im Wesentlichen gerade verlaufend und der zweite sich unmittelbar daran anschließende Abschnitt (14b, 15b) einen in Richtung des Kopfes bogenförmigen Verlauf aufweist.

5. Kopfstütze nach Anspruch 4,
**dadurch gekennzeichnet,**
**dass** sich im Ausgangszustand der untere Führungszapfen (16) am unteren Ende der Führungsnut (14, 15) befindet, wohingegen der obere Führungszapfen (17) sich im Übergangsbereich vom ersten zum zweiten Abschnitt der Führungsnut befindet.

6. Kopfstütze nach einem der voranstehenden Ansprüche,
**dadurch gekennzeichnet,**
**dass** eine Einrichtung (18) zum Ausfahren der Kopfstütze im Crash-Fall vorgesehen ist, durch die die Aufwärtsbewegung der mindestens einen Führungsstange (3) oder der Führungshülse (4) auslösbar ist.

7. Kopfstütze nach Anspruch 6,
**dadurch gekennzeichnet,**
**dass** die Einrichtung (18) zum Ausfahren der Kopfstütze (1) mit der Führungshülse (4) in Verbindung steht.

## Claims

1. A head rest (1) of a motor vehicle seat, comprising a head rest body (2) as well as at least one guide rod (3) holding the head rest body (2), which is receivable by the backrest of the vehicle seat, the guide rod (3) being displaceably received by a receiving device (10) disposed in the backrest,
the receiving device (10) having a guide groove for guiding the guide rod, which serves to receive two guide pins (16, 17),
**characterized in that**
in case of a crash, the at least one guide rod (3) is guided by the receiving device (10) at two opposite sides of the guide rod (3) during the upward movement of the head rest (1),
the receiving device (10) having two guide grooves (14, 15) facing each other for guiding the at least one guide rod (3) or the guide sleeve (4) receiving the guide rod (3),
at least two guide pins (16, 17) disposed above one another, which engage with the respective guide groove (14, 15), being respectively provided on the guide rod or the guide sleeve for guidance of the guide rod (3) or the guide sleeve (4) in the guide grooves.

2. The head rest according to claim 1,
**characterized in that**
the at least one guide rod (3) is disposed in the guide sleeve (4) in a longitudinally displaceable manner.

3. The head rest according to claim 1 or 2,
**characterized in that**
the receiving device (10) has a U-shaped cross-section, the two legs (12, 13) of the U-shaped receiving device (10) respectively comprising the guide groove (14, 15).

4. The head rest according to one of the afore-mentioned claims, **characterized in that**
the guide grooves (14, 15) have respectively two sections (14a, 14b; 15a, 15b) in the direction of the upward movement of the head rest (1), the first lower section (14a, 15a) running substantially straight and the second immediately adjacent section (14b, 15b) having a course that is curved in the direction of the head.

5. The head rest according to claim 4,
**characterized in that**
in the initial state, the lower guide pin (16) is located at the lower end of the guide groove (14, 15), whereas the upper guide pin (17) is located in the transition area between the first and the second section of the guide groove.

6. The head rest according to one of the afore-mentioned claims, **characterized in that**
a device (18) for extending the head rest in case of a crash is provided, by means of which the upward movement of the at least one guide rod (3) or the guide sleeve (4) is triggerable.

7. The head rest according to claim 6,
**characterized in that**
the device (18) for extending the head rest (1) is connected to the guide sleeve (4).

## Revendications

1. Repose-tête (1) pour siège de véhicule à moteur, comportant un corps d'appui-tête (2), ainsi qu'au moins une tige de guidage (3) de maintien du corps d'appui-tête (2) qui est montée sur le dossier du siège du conducteur, dans lequel la tige de guidage (3) est montée de façon coulissante sur une installation de support (10) disposée dans le dossier du siège,
dans lequel l'installation de support (10) est pourvue d'une rainure destinée à recevoir deux bouchons de guidage (16, 17),
**caractérisé en ce que,**
par l'installation de support (10), au moins une tige de guidage (3) est guidée pendant le déplacement vers le haut du repose-tête (1) en cas de crash,
dans lequel le guidage de au moins une tige de guidage (3) ou de la douille de guidage (4) qui réceptionne la tige de guidage (3), l'installation de support (10) dispose de deux rainures de guidage opposées (14, 15),
dans lequel le guidage de la tige de guidage (3) ou de la douille de guidage (4) dans les rainures de guidage, est assuré respectivement par au moins deux bouchons de guidage superposés (16, 17), qui sont engagés dans les rainures de guidage correspondantes (14, 15).

2. Repose-tête selon la revendication 1,
**caractérisé en ce que,**
au moins une tige de guidage (3) est agencée pour coulisser longitudinalement dans la douille de guidage (4).

3. Repose-tête selon la revendication 1 ou 2,
**caractérisé en ce que,**
l'installation de support (10) a un profil en U en section transversale, dans lequel les deux faces latérales (12, 13) du profil en U de l'installation de support (10) comportent respectivement les rainures de guidage (14, 15).

4. Repose-tête selon l'une des revendications précédentes, **caractérisé en ce que,**
les rainures de guidage (14, 15) comportent respectivement deux sections (14a, 14b; 15a, 15b) dans la direction du déplacement vers le haut du repose-tête (1),
dans lequel la première section inférieure (14a, 15a) est essentiellement rectiligne et la deuxième section qui est disposée dans le prolongement (14b, 15b) est incurvée en direction de la tête.

5. Repose-tête selon la revendication 4,
**caractérisé en ce que,**
le bouchon de guidage inférieur (16), se situe à l'extrémité inférieure de la rainure de guidage (14, 15) dans l'état relevé, le bouchon supérieur (17) étant par contre disposé dans la zone de transition entre la première et la deuxième section.

6. Repose-tête selon l'une des revendications précédentes, **caractérisé en ce que,**
une installation (18) pour le relevage du repose-tête en cas de crash est prévue, au moyen de laquelle le mouvement de relevage de ladite au moins une tige de guidage (3) ou de la douille de guidage (4) est déclenchée.

7. Repose-tête selon la revendication 6,
**caractérisé en ce que,**
l'installation (18) pour le relevage du repose-tête (1) est couplée avec la douille de guidage (4).
